# EUROPÄISCHE PATENTSCHRIFT

(11) **EP 3 717 786 B1**
(45) Veröffentlichungstag und Bekanntmachung des Hinweises auf die Patenterteilung: **23.11.2022**
(21) Anmeldenummer: 18788706.2
(22) Anmeldetag: 10.10.2018
(51) Int. Cl.: F16B 5/02

(54) **TOLERANZAUSGLEICHSANORDNUNG MIT KLEMMSICHERUNG**
TOLERANCE COMPENSATION ARRANGEMENT WITH SAFETY CLAMP
DISPOSITIF DE COMPENSATION DE TOLÉRANCE AVEC SÉCURITÉ PAR SERRAGE

(30) Priorität: 19.12.2017 DE 102017130605
(43) Veröffentlichungstag der Anmeldung: 07.10.2020
(73) Patentinhaber: Böllhoff Verbindungstechnik GmbH, 33649 Bielefeld (DE)
(72) Erfinder: FIGGE, Hans-Ulrich, 33758 Schloß Holte - Stukenbrock (DE)
(74) Vertreter: HWP Intellectual Property
(86) Internationale Anmeldenummer: PCT/EP2018/077632
(87) Internationale Veröffentlichungsnummer: WO 2019/120665

(56) Entgegenhaltungen:
- EP-A2- 2 495 453
- DE-U1-202008 011 318

## Beschreibung

### 1. Gebiet der Erfindung

Die vorliegende Erfindung betrifft eine Toleranzausgleichsanordnung zum Befestigen eines ersten Bauteils an einem zweiten Bauteil mit selbsttätigem Ausgleich von Toleranzen im Abstand zwischen dem ersten und dem zweiten Bauteil. Ebenso betrifft die vorliegende Erfindung ein erstes Bauteil in Kombination mit einer Toleranzausgleichsanordnung sowie ein erstes und ein zweites Bauteil, die über eine Toleranzausgleichsanordnung mittels einer Befestigungsschraube aneinander befestigt sind, ein Herstellungsverfahren einer Toleranzausgleichsanordnung sowie ein Montageverfahren einer Toleranzausgleichsanordnung.

### 2. Hintergrund der Erfindung

Toleranzausgleichsanordnungen sind in großer Vielfalt bekannt. Sie bestehen üblicherweise aus einer Verstellbuchse oder Verstelleinheit mit einem sogenannten Mitschleppabschnitt oder Mitschlepper, der mit einer Befestigungsschraube eine Reibschlussverbindung eingehen kann. Beim Drehen der Befestigungsschraube wird daher die Verstellbuchse mitgedreht, bis sie sich an eines der beiden Bauteile anlegt, worauf dann beim Weiterdrehen der Befestigungsschraube und entsprechender Erhöhung des Drehmoments die Reibschlussverbindung überwunden wird, sodass dann die beiden Bauteile durch die Befestigungsschraube über die Verstellbuchse miteinander verspannt werden können.

Ein Beispiel für eine Toleranzausgleichsanordnung ist in der EP 1 304 489 A2 beschrieben. Die Toleranzausgleichsanordnung besteht aus einer Schraube, einer Mutter und einer Ausgleichsbuchse. Die Ausgleichsbuchse hat ein linksgängiges Außengewinde, das mit einem passenden linksgängigen Innengewinde der Mutter verschraubbar ist, und einen Klemmabschnitt, der mit der Schraube durch Reibschluss verbindbar und bei Überwindung des Reibschlusses relativ zur Schraube drehbar ist, so dass die Schraube beim Einschraubvorgang die Ausgleichsbuchse durch Reibschluss mitdreht und hierdurch entgegen der Einsteckrichtung aus der Mutter herausschraubt und, wenn sich die Ausgleichsbuchse an das zweite Bauteil angelegt hat, unter Überwindung des Reibschlusses mit einem rechtsgängigen Innengewinde der Mutter oder der Ausgleichsbuchse eine Schraubverbindung zum Verspannen der beiden Bauteile eingeht.

Bei der Verwendung einer solchen Toleranzausgleichsanordnung kommt die Befestigungsschraube daher zunächst mit dem Klemmabschnitt oder Mitschlepper in Eingriff, bevor sie anschließend mit dem Innengewinde der Befestigungsmutter in Eingriff gelangt. Somit wird bei üblichen selbsttätigen Toleranzausgleichsystemen die Verstellgewinde, also die Gewindepaarung zwischen Verstelleinheit und Basiselement, durch das Anziehen der Befestigungsschraube verspannt. Die Gewindeflanken der Verstellgewinde werden dabei aufeinander gepresst und das Spiel zwischen Innen- und Außengewinde wird eliminiert. Da die Verstellgewinde im Allgemeinen eine feine Steigung aufweisen, sind sie so gegen ein Lösen gesichert.

Weiterhin bestehen die Ausgleichsbuchse oder Verstelleinheit sowie das Basiselement in aktuellen Toleranzausgleichsanordnungen üblicherweise aus Kunststoff. Daher ist die Kraft begrenzt, die eine solche Toleranzausgleichsanordnung aufnehmen kann, insbesondere durch die Materialeigenschaften des verwendeten Kunststoffes.

Eine weitere Befestigungsanordnung mit Toleranzausgleich ist in DE 20 2008 011 318 U1 beschrieben. Die Befestigungsanordnung zum Befestigen eines Bauteils B an einem Bauteil A mit selbsttätigem Ausgleich von Toleranzen im Abstand zwischen dem Bauteil B und dem Bauteil A weist ein Aufnahmeelement und ein Verstellelement auf, das über eine erste Gewindepaarung einer ersten Gangrichtung mit dem Aufnahmeelement verschraubbar ist. Eine Befestigungsschraube ist durch eine Öffnung von Aufnahmeelement und Verstellelement einsetzbar. Die Befestigungsschraube ist über eine zweite Gewindepaarung einer der ersten entgegengesetzten zweiten Gangrichtung in das Aufnahmeelement einschraubbar und mit dem Verstellelement durch eine lösbare Mitschleppverbindung verbindbar. Auf diese Weise wird beim Drehen der Befestigungsschraube das Verstellelement mitgedreht und dadurch in Anlage mit dem Bauteil B bewegt. Das Verstellelement besteht aus einem innerhalb eines Gewindeelements drehfest und schwimmend angeordneten Mitschlepper, so dass eine Fehlausrichtung der Befestigungsschraube beim Einsetzen in das Verstellelement ausgleichbar ist.

Die Aufgabe der vorliegenden Erfindung ist daher, eine alternative Konstruktion einer Toleranzausgleichsanordnung bereitzustellen, die im Hinblick auf die bekannten Stand der Technik Toleranzausgleichsanordnungen optimiert ist, insbesondere im Hinblick auf die damit realisierbaren Festigkeiten bei einer gleichzeitigen Sicherstellung eines möglichst breiten Einsatzbereichs.

### 3. Zusammenfassung der Erfindung

Die obige Aufgabe wird gelöst durch eine Toleranzausgleichsanordnung zum Befestigen eines ersten Bauteils an einem zweiten Bauteil mit selbsttätigem Ausgleich von Toleranzen im Abstand zwischen dem ersten und dem zweiten Bauteil gemäß dem unabhängigen Patentanspruch 1, ein erstes Bauteil in Kombination mit einer Toleranzausgleichsanordnung gemäß dem Patentanspruch 12, ein erstes und ein zweites Bauteil, die über die Toleranzausgleichsanordnung mittels einer Befestigungsschraube aneinander befestigt sind, gemäß dem Patentanspruch 13, ein Herstellungsverfahren einer Toleranzausgleichsanordnung gemäß dem unabhängigen Patentanspruch 14 sowie ein Montageverfahren einer Toleranzausgleichsanordnung gemäß dem unabhängigen Patentanspruch 17. Vorteilhafte Ausfiihrungsformen und Weiterentwicklungen ergeben sich aus der nachfolgenden Beschreibung, den Zeichnungen sowie den anhängigen Patentansprüchen.

Die erfindungsgemäße Toleranzausgleichsanordnung zum Befestigen eines ersten Bauteils an einem zweiten Bauteil mit selbsttätigem Ausgleich von Toleranzen im Abstand zwischen dem ersten Bauteil und dem zweiten Bauteil, weist die folgenden Merkmale auf: ein Basiselement mit einem ersten Innengewinde sowie einer Befestigungsstruktur an einer Außenseite zur Befestigung des Basiselements in einer Öffnung des ersten Bauteils, eine Verstelleinheit mit einem ersten Außengewinde, wobei das erste Außengewinde mit dem ersten Innengewinde des Basiselements eine erste Gewindepaarung einer ersten Gangrichtung bildet und die Verstelleinheit benachbart zu einem ersten axialen Ende eine Befestigungshülse mit einem zweiten Innengewinde aufweist, und eine Mitschleppereinheit, die zumindest teilweise in der Verstelleinheit benachbart zu einem zweiten axialen Ende angeordnet ist, während eine Befestigungsschraube über eine zweite Gewindepaarung einer der ersten entgegengesetzten zweiten Gangrichtung zunächst in das zweite Innengewinde der Befestigungshülse durch ein Drehen in die zweite Gangrichtung einschraubbar ist und nachfolgend mit der Mitschleppereinheit durch eine lösbare Mitschleppverbindung verbindbar ist, so dass beim Drehen der Befestigungsschraube die Verstelleinheit mitdrehbar sowie in Anlage mit dem zweiten Bauteil bewegbar ist und danach ein radialer Presssitz zwischen Verstelleinheit und Basiselement herstellbar ist.

Vorzugsweise wird der Presssitz zwischen Verstelleinheit und Basiselement alleine durch die Befestigungsschraube hergestellt.

Nachfolgend wird die erfindungsgemäße Toleranzausgleichsanordnung anhand ihrer Verwendung illustriert. Dabei wird davon ausgegangen, dass die erfindungsgemäße Toleranzausgleichsanordnung bereits in einem ersten Bauteil befestigt ist. Eine solche Befestigung erfolgt über die Befestigungsstruktur an der Außenseite des Basiselements. Im Hinblick auf die Gestaltung der Befestigungsstruktur wird insbesondere auf die EP 2 003 346 A2 verwiesen. Das Basiselement weist daher vorzugsweise mindestens einen radial vorstehenden Haltervorsprung auf, so dass das Basiselement durch form- und/oder kraftschlüssiges Halten des ersten Bauteils zwischen dem Flansch und dem mindestens einen Haltevorsprung am ersten Bauteil festlegbar ist. Insbesondere sind am Flansch zwei sich gegenüberliegende Rastvorsprünge angeordnet und axial beabstandet vom Flansch sind zwei Haltevorsprünge vorgesehen, die sich ebenfalls gegenüber liegen. Ein Versatz zwischen den Haltevorsprüngen und den Rastvorsprüngen beträgt vorzugsweise 90°. Vorteilhafterweise ist der Flansch an dem axialen Ende des Basiselements angeordnet, das bei der späteren Verwendung dem zweiten Bauteil zugewandt ist. Aufgrund des mindestens einen Haltevorsprungs kann das Basiselement in ein Schlüsselloch des ersten Bauteils eingesetzt und mittels Drehen darin befestigt werden. Auch andere Befestigungsstrukturen an der Außenseite des Basiselements sind bevorzugt, wie beispielsweise ein Gewinde oder Ähnliches, um das Basiselement in der Öffnung des ersten Bauteils zu befestigen.

Beabstandet vom ersten Bauteil wird ein zweites Bauteil angeordnet, wobei eine Öffnung im zweiten Bauteil vorzugsweise mit der Öffnung des ersten Bauteils ausgerichtet ist. Eine Befestigungsschraube wird zur Befestigung des zweiten Bauteils durch die Öffnung im zweiten Bauteil geführt und gelangt aufgrund des Aufbaus der erfindungsgemäßen Toleranzausgleichsanordnung zunächst in Eingriff mit der Befestigungshülse der Verstelleinheit. Die am ersten axialen Ende der Verstelleinheit angeordnete Befestigungshülse befindet sich daher an dem Ende der Verstelleinheit, das dem zweiten Bauteil zugewandt ist. Daher wird die Befestigungsschraube zuerst in die Befestigungshülse eingeschraubt, die vorzugsweise eine Mutter mit einem Flansch ist. Erst danach gelangt die Befestigungsschraube mit der Mitschleppereinheit reibschlüssig in Eingriff. Die am zweiten axialen Ende der Verstelleinheit angeordnete Mitschleppereinheit befindet sich daher an dem Ende der Verstelleinheit, das vom zweiten Bauteil abgewandt ist. In einer vorteilhaften Ausführungsform ist das erste axiale Ende der Toleranzausgleichsanordnung mit der Befestigungshülse daher abgewandt von dem Basiselement und das zweite axiale Ende der Verstelleinheit mit der Mitschleppereinheit ist dem Basiselement zugewandt. Vorzugsweise handelt es sich bei dem Basiselement, der Verstelleinheit und der Mitschleppereinheit um getrennte Elemente oder Bauteile.

Die Befestigungsschraube bildet mit der Mitschleppereinheit eine lösbare Mitschleppverbindung, um beim Drehen der Befestigungsschraube die Verstelleinheit mitzudrehen und dadurch die Verstelleinheit zwecks Toleranzausgleich in Anlage mit dem zweiten Bauteil zu bewegen. Hierbei gelangt insbesondere auch die Befestigungshülse in Anlage mit dem zweiten Bauteil.

Beim Weiterdrehen der Befestigungsschraube, bei dem mit einer entsprechenden Erhöhung des Drehmoments die Mitschleppverbindung überwunden wird, wird die Mitschleppereinheit durch das Einschrauben der Befestigungsschraube in die Mitschleppereinheit radial nach außen gedrückt und sorgte so für eine Verklemmung, also den radialen Presssitz, zwischen dem Außengewinde der Verstelleinheit und dem Innengewinde des Basiselements.

Insbesondere aufgrund dieser Verklemmung zwischen Außengewinde der Verstelleinheit und Innengewinde des Basiselements wird bei einem entsprechenden Spiel der Gewindepaarung eine Relativbewegung verhindert, die ansonsten in einem unerwünschten Klappern resultieren würde. Ein Spiel in der Gewindepaarung zwischen Verstelleinheit und Basiselement ist oft gewünscht, damit das Mitschleppmoment der Verstelleinheit klein ausgelegt werden kann, so dass die Kraft, die später auf das anzuschraubende zweite Bauteil wirkt, möglichst gering ist. Ebenso sorgt die Verklemmung dafür, dass andererseits keine spielfreie Fertigung der Gewindepaarung erforderlich ist. Ein spielfreies Fertigen hätte den Nachteil, dass ein sehr hohes Mitschleppmoment benötigt wird, um die Verstelleinheit sicher ausfahren zu können. Dadurch ergibt sich eine sehr hohe axiale Kraft, die auf das anzuschraubende zweite Bauteil wirkt, so dass sich eine Toleranzausgleichsanordnung mit spielfreier Gewindepaarung zwischen Verstelleinheit und Basiselement nur bei sehr stabilen Stahlkonstruktionen einsetzen lässt.

Ein Vorteil der erfindungsgemäßen Toleranzausgleichsanordnung ist daher, dass eine leichtgängige Gewindepaarung zwischen Verstelleinheit und Basiselement mit dem entsprechenden Spiel vorliegen kann, ohne dass es bei der Verwendung zu einem Klappern kommt. Somit reicht ein geringes Mitschleppmoment, um die Verstelleinheit sicher auszufahren. Daher ist die axiale Kraft, die auf das anzuschraubende zweite Bauteil wirkt, im Vergleich zu anderen Toleranzausgleichsanordnungen klein, wie dies gewünscht ist. Das Besondere an der vorliegenden Lösung ist weiterhin, dass das Spiel der Gewindepaarung zwischen Verstelleinheit und Basiselement beim weiteren Einschrauben der Befestigungsschraube eliminiert wird und das Verstellgewinde gegen Losdrehen verklemmt wird. Zudem muss die Gewindepaarung aus Verstelleinheit und Basiselement nicht die Vorspannkraft der Befestigungsschraube übertragen.

In einer bevorzugten Ausführungsform weist die Mitschleppereinheit eine Mehrzahl an Mitschleppsegmenten auf, die umfänglich gleichmäßig beabstandet und mittels Verbindungsstegen verbunden sind. Vorteilhafterweise weist die Mitschleppereinheit dabei vier Befestigungssegmente auf. Aufgrund der über Verbindungsstege miteinander verbundenen Mitschleppsegmente ist eine Kraft, die nach der Anlage der Verstelleinheit am zweiten Bauteil zur Überwindung des Drehmoments erforderlich ist, flexibel auf den jeweiligen Anwendungsfall wie gewünscht einstellbar. Zudem sorgen die Verbindungsstege dafür, dass sich die Mitschleppsegmente radial nach außen bewegen können und so gegen die Innenseite der Verstelleinheit drücken, die damit wiederum gegen das Basiselement gedrückt wird, was für die entsprechende Verklemmung sorgt. Daher ist es besonders bevorzugt, wenn die Verbindungsstege eine geringere Dicke als die Mitschleppsegmente aufweisen.

In einer vorteilhaften Ausführungsform weist jedes der Mitschleppsegmente an der radial inneren Seite eine Fase an einem der Befestigungshülse zugewandten Ende auf. Die Fase gelangt dann als erster Bestandteil der Mitschleppereinheit mit der Befestigungsschraube in Eingriff. Der Winkel der Fase beeinflusst in diesem Zusammenhang die erforderliche Kraft zur späteren Überwindung des Drehmoments. In einer bevorzugten Ausführungsform ist der Winkel der Fase bezogen auf eine Längsachse der Toleranzausgleichsanordnung ein spitzer Winkel, der insbesondere ausgewählt ist aus einem Winkelbereich von 10° bis 30°. Zudem ist es bevorzugt, wenn jedes der Mitschleppsegmente an der radial äußeren Seite eine Rastnase oder einen Klemmsteg aufweist, die mit einer ersten Freimachung der Verstelleinheit zusammenwirkt. Die erste Freimachung der Verstelleinheit verläuft radial und dient einerseits dem Eingreifen der Rastnase zur sicheren Befestigung der Mitschleppereinheit in der Verstelleinheit. Andererseits sorgt die Freimachung, die insbesondere ein Durchbruch ist, für eine Verbesserung der Flexibilität der Verstelleinheit in dem entsprechenden Bereich. Auf diese Weise ist die Verklemmung zwischen Verstelleinheit und Basiselement somit weiter verbessert. Besonders bevorzugt ist es, wenn zusätzlich die Rastnase oder der Klemmsteg nach dem Einschrauben der Befestigungsschraube direkt mit dem Basiselement in Kontakt stehen. Auf diese Weise wird das Verklemmen weiter unterstützt.

In einer weiteren bevorzugten Ausführungsform weist jedes der Mitschleppsegmente an der radial äußeren Seite einen Führungssteg benachbart der Rastnasen auf, der mit einer zweiten Freimachung der Verstelleinheit zusammenwirkt. Die zweite Freimachung, die insbesondere ein Durchbruch ist, sorgt, wie bereits die erste Freimachung, für eine Verbesserung der Flexibilität der Verstelleinheit in dem entsprechenden Bereich. Allerdings verläuft die zweite Freimachung im Gegensatz zur ersten Freimachung axial, also parallel zur Längsachse der Verstelleinheit, und nicht radial. Auf diese Weise ist die Verklemmung zwischen Verstelleinheit und Basiselement weiter verbessert. Darüber hinaus verhindert das Zusammenwirken von Führungssteg und zweiter Freimachung ein Drehen der Mitschleppereinheit während des Einsetzens, so dass die lagerichtige Montage der Mitschleppereinheit in der Verstelleinheit sichergestellt ist. Zudem ist es vorteilhaft, wenn der Führungssteg scharfkantig ausgebildet ist und nach Einschrauben der Befestigungsschraube direkt mit dem Basiselement in Kontakt steht. Auf diese Weise verkrallt sich der Führungssteg im Innengewinde des Basiselements und unterstützt so die Verklemmung.

In einer vorteilhaften Ausführungsform bestehen die Verstelleinheit aus Kunststoff und die Befestigungshülse aus Metall, wobei die Befestigungshülse vom Material der Verstelleinheit umspritzt und ein erstes axiales Ende der Befestigungshülse bündig mit dem ersten axialen Ende der Verstelleinheit angeordnet ist. Somit ist eine Verschraubung mit hoher Festigkeit, beispielsweise eine 8.8 Verschraubung, realisierbar, obwohl die Gewindepaarung zwischen Verstelleinheit und Basiselement zumindest teilweise Kunststoff aufweist. Daher ist es besonders bevorzugt, wenn die Mitschleppereinheit und das Basiselement aus Kunststoff bestehen. Dies realisiert eine kostengünstige Herstellung der entsprechenden Bauteile. Zudem handelt es sich bei dem Außengewinde der Verstelleinheit und dem Innengewinde des Basiselements um definierte Gewinde, da die Bauteile aus Kunststoff, insbesondere mittels Spritzgießen, hergestellt sind.

In einer weiteren bevorzugten Ausführungsform weist die Verstelleinheit benachbart dem ersten axialen Ende eine Struktur auf, insbesondere eine radial vorstehende Struktur an der ein Vorsprung angeordnet ist, der in axialer Richtung in Richtung des zweiten axialen Endes der Verstelleinheit vorsteht, die mit einer Aussparung im Basiselement zusammenwirkt, so dass eine Konter- und/oder Verdrehsicherung gebildet ist. Die Wirkungsweisen von Konter- und/oder Verdrehsicherungen im Zusammenhang mit Toleranzausgleichsanordnungen sind bekannt. Insbesondere werden die Verstelleinheit und das Basiselement auf diese Weise während eines Transports gesichert, so dass die Verstelleinheit nicht weiter in das Basiselement eingeschraubt werden kann.

Ein erfindungsgemäßes erstes Bauteil liegt in Kombination mit einer Ausführungsform der oben beschriebenen erfindungsgemäßen Toleranzausgleichsanordnung vor, wobei die Toleranzausgleichsanordnung in das erste Bauteil eingeschraubt ist. Zu diesem Zweck weist die erfindungsgemäße Toleranzausgleichsanordnung vorzugsweise ein Außengewinde am Basiselement auf. Das erste Bauteil in Kombination mit der Toleranzausgleichsanordnung weist die oben beschriebenen Vorteile der Toleranzausgleichsanordnung auf, so dass auf die entsprechenden Ausführungen verwiesen wird.

Erfindungsgemäß sind ein erstes und ein zweites Bauteil über eine Ausführungsform der oben beschriebenen erfindungsgemäßen Toleranzausgleichsanordnung sowie mittels einer Befestigungsschraube aneinander befestigt. Die Befestigungsschraube besteht vorzugsweise aus Metall, insbesondere aus Stahl. Auf diese Weise, und wenn die Befestigungshülse auch aus Metall ist, stellt die Gewindepaarung zwischen Befestigungsschraube und Befestigungshülse eine Metall-Metall-Verbindung dar. Die aneinander befestigten Bauteile weisen ebenfalls die oben beschriebenen Vorteile der erfindungsgemäßen Toleranzausgleichsanordnung auf, so dass auch in diesem Zusammenhang auf die entsprechenden Ausführungen verwiesen wird.

Ein erfindungsgemäßes Herstellungsverfahren einer erfindungsgemäßen Toleranzausgleichsanordnung, umfasst die folgenden Schritte: Bereitstellen eines Basiselements mit einem ersten Innengewinde sowie einer Befestigungsstruktur an einer Außenseite, Bereitstellen einer Verstelleinheit mit einem ersten Außengewinde, einer Befestigungshülse mit einem zweiten Innengewinde, die benachbart zu einem ersten axialen Ende der Verstelleinheit angeordnet ist sowie einer zumindest teilweise in der Verstelleinheit benachbart zu einem zweiten axialen Ende der Verstelleinheit angeordneten Mitschleppereinheit, danach Einschrauben der Verstelleinheit in das Basiselement, wobei das erste Außengewinde mit dem ersten Innengewinde eine erste Gewindepaarung einer ersten Gangrichtung bildet. Mit der erfindungsgemäß hergestellten Toleranzausgleichsanordnung sind die oben beschriebenen Vorteile der erfindungsgemäßen Toleranzausgleichsanordnung realisierbar. In dieser Hinsicht wird erneut auf die entsprechenden Ausführungen verwiesen. Das Einschrauben der Verstelleinheit in das Basiselement erfolgt vorteilhafterweise so, dass bei Vorhandensein der Konter- und/oder Verdrehsicherung diese ihre Funktion erfüllen können.

In einer bevorzugten Ausführungsform umfasst der Schritt des Bereitstellens des Basiselements ein Spritzgießen des Basiselements aus Kunststoff. Zusätzlich oder alternativ umfasst der Schritt des Bereitstellens der Verstelleinheit ein Bereitstellen der Befestigungshülse aus Metall und Umspritzen der Befestigungshülse mit einem Kunststoff zur Herstellung der Verstelleinheit. Anstelle des Umspritzens sind andere Vorgehensweisen ebenso bevorzugt, wie beispielsweise ein Einkleben der Befestigungshülse in die Verstelleinheit oder ein Einschrumpfen oder Einklemmen. Auf diese Weise kann bei einer Befestigungsschraube aus Metall eine im Vergleich zu Kunststoff belastbarere Metall-Metall-Verbindung für die Gewindepaarung aus Befestigungshülse und Befestigungsschraube bereitgestellt werden. Für die Gewindepaarung aus Verstelleinheit und Basiselement wird demgegenüber Kunststoff verwendet, so dass die Gewinde genau definiert sind.

In einer weiteren vorteilhaften Ausführungsform umfasst der Schritt des Bereitstellens der Verstelleinheit das Bereitstellen einer Mitschleppereinheit, insbesondere Spritzgießen einer Mitschleppereinheit, und Einclipsen der Mitschleppereinheit in die Verstelleinheit. Auf diese Weise ist sichergestellt, dass die Verstelleinheit, das Basiselement und die Mitschleppereinheit jeweils eigene Bauteile sind. Dies erhöht die Flexibilität der Toleranzausgleichsanordnung, da die verwendeten Materialien gezielt in Abhängigkeit vom jeweiligen Anwendungsfall ausgewählt werden können.

Ein erfindungsgemäßes Montageverfahren einer Toleranzausgleichsanordnung, insbesondere einer erfindungsgemäßen Toleranzausgleichsanordnung, weist die Schritte auf: Einsetzen der Toleranzausgleichsanordnung in eine erste Öffnung eines ersten Bauteils, wobei die Toleranzausgleichsanordnung aufweist ein Basiselement, das ein erstes Innengewinde sowie eine Befestigungsstruktur an einer Außenseite zur Befestigung des Basiselements in einer Öffnung des ersten Bauteils umfasst, eine in das Basiselement eingeschraubte Verstelleinheit mit einem ersten Außengewinde, wobei das erste Außengewinde mit dem ersten Innengewinde des Basiselements eine erste Gewindepaarung einer ersten Gangrichtung bildet und die Verstelleinheit benachbart zu einem ersten axialen Ende eine Befestigungshülse mit einem zweiten Innengewinde aufweist, sowie eine Mitschleppereinheit, die zumindest teilweise in der Verstelleinheit benachbart zu einem zweiten axialen Ende angeordnet ist, Anordnen eines zweiten Bauteils in einem Abstand zum ersten Bauteil mit darin eingesetzter Toleranzausgleichsanordnung, Einsetzen einer Befestigungsschraube durch eine Öffnung im zweiten Bauteil, wobei die Befestigungsschraube ein zweites Außengewinde aufweist, das mit dem zweiten Innengewinde der Befestigungshülse eine zweite Gewindepaarung einer der ersten entgegengesetzten zweiten Gangrichtung bildet, und Einschrauben der Befestigungsschraube in die Befestigungshülse durch ein Drehen der Befestigungsschraube in die zweite Gangrichtung, danach Weiterdrehen der Befestigungsschraube bis die Befestigungsschraube mit der Mitschleppereinheit reibschlüssig in Eingriff steht, wodurch die Verstelleinheit aus dem Basiselement in Richtung des zweiten Bauteils bewegt wird, bis die Verstelleinheit, insbesondere die Befestigungshülse, in Anlage mit dem zweiten Bauteil kommt, und Weiterdrehen der Befestigungsschraube in die Mitschleppereinheit, wodurch die Mitschleppereinheit die Verstelleinheit im Basiselement verklemmt. Mit dem Montageverfahren ist somit eine Verbindung zwischen zwei Bauteilen mittels einer Toleranzausgleichsanordnung herstellbar. Im Hinblick auf die Vorteile wird auf die entsprechenden obigen Ausführungen verwiesen, um unnötige Wiederholungen zu vermeiden.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine perspektivische Ansicht einer Ausführungsform einer erfindungsgemäßen Toleranzausgleichsanordnung,
- Figur 2: eine perspektivische Ansicht einer Ausführungsform einer Befestigungshülse für eine Verstelleinheit,
- Figur 3: eine Explosionsansicht einer Ausführungsform einer Verstelleinheit und einer Mitschleppereinheit,
- Figur 4: eine Explosionsansicht einer Ausführungsform einer Verstelleinheit mit darin eingesetzter Mitschleppereinheit und eines Basiselements,
- Figur 5: eine Explosionsansicht einer Ausführungsform einer Verstelleinheit mit darin eingesetzter Mitschleppereinheit und eines Basiselements,
- Figur 6: eine Explosionsansicht einer Ausführungsform einer Verstelleinheit, einer Mitschleppereinheit und eines Basiselements,
- Figur 7: eine Ansicht einer Ausführungsform der erfindungsgemäßen Toleranzausgleichsanordnung von unten,
- Figur 8: eine perspektivische Ansicht einer Ausführungsform der erfindungsgemäßen Toleranzausgleichsanordnung von unten,
- Figur 9: eine Ansicht einer Ausführungsform der erfindungsgemäßen Toleranzausgleichsanordnung in einem ersten Bauteil von unten,
- Figur 10: eine Schnittansicht einer Ausführungsform der erfindungsgemäßen Toleranzausgleichsanordnung mit noch nicht eingeschraubter Befestigungsschraube,
- Figur 11: eine Schnittansicht einer Ausführungsform der erfindungsgemäßen Toleranzausgleichsanordnung mit eingeschraubter Befestigungsschraube,
- Figur 12: eine Schnittansicht einer Ausführungsform der erfindungsgemäßen Toleranzausgleichsanordnung mit festgeschraubter Befestigungsschraube,
- Figur 13: einen schematischen Verfahrensablauf einer Ausführungsform eines erfindungsgemäßen Herstellungsverfahrens und
- Figur 14: einen schematischen Verfahrensablauf einer Ausführungsform eines erfindungsgemäßen Montageverfahrens.

### 5. Detaillierte Beschreibung der bevorzugten Ausführungsformen

Nachfolgend wird eine Ausführungsform einer Toleranzausgleichsanordnung 1 gemäß der vorliegenden Erfindung detailliert beschrieben. Bei der Toleranzausgleichsanordnung 1 handelt es sich um eine Anordnung zum Befestigen eines ersten Bauteils an einem zweiten Bauteil mit selbsttätigem Ausgleich von Toleranzen im Abstand zwischen dem ersten Bauteil und dem zweiten Bauteil.

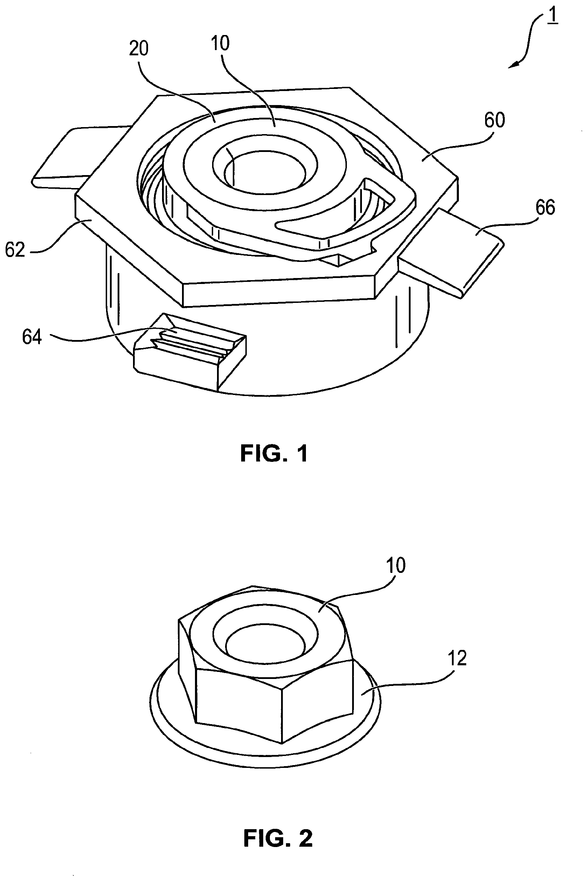

Bezug nehmend auf Figur 1 weist die Toleranzausgleichsanordnung 1 ein Basiselement 60 und eine Verstelleinheit 20 mit darin angeordneter Befestigungshülse 10 auf. Das Basiselement 60 hat einen zylindrischen Grundkörper mit einem Durchgangsloch und einem ersten Innengewinde sowie an der radial äußeren Seite eine Befestigungsstruktur. Es besteht vorzugsweise aus Kunststoff und weist an einem ersten axialen Ende einen Flansch 62 auf, der eine sechseckige Form hat, so dass der Flansch 62 ein Antriebsmerkmal für das Basiselement 60 darstellt, das mit einem herkömmlichen Werkzeug angreifbar ist. Weiterhin sind am zylindrischen Grundkörper axial beabstandet zum Flansch 62 zwei gegenüber angeordnete Haltevorsprünge 64 vorhanden, während am Flansch 62 an zwei gegenüberliegenden Seiten zwei Rastvorsprünge 66 vorhanden sind. Die Haltevorsprünge 64 und die Rastvorsprünge 66 sind versetzt zueinander angeordnet, im dargestellten Beispiel um 90°. Im Hinblick auf diesen Aufbau des Basiselements mit Halte- und Rastvorsprüngen wird auch auf die EP 2 003 346 A2 verwiesen.

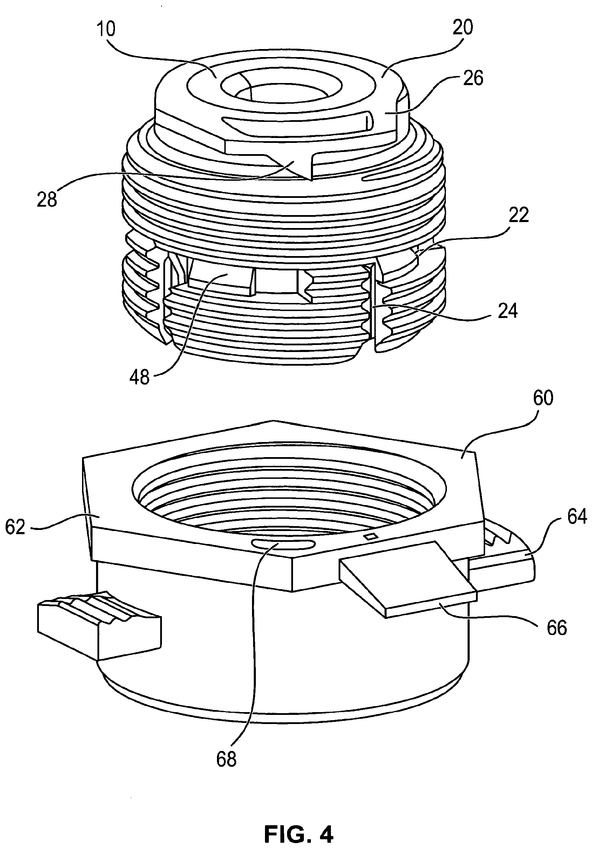

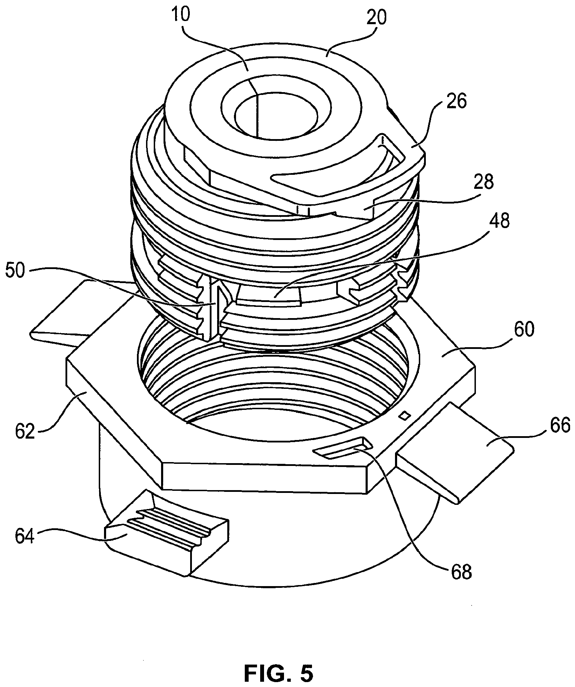

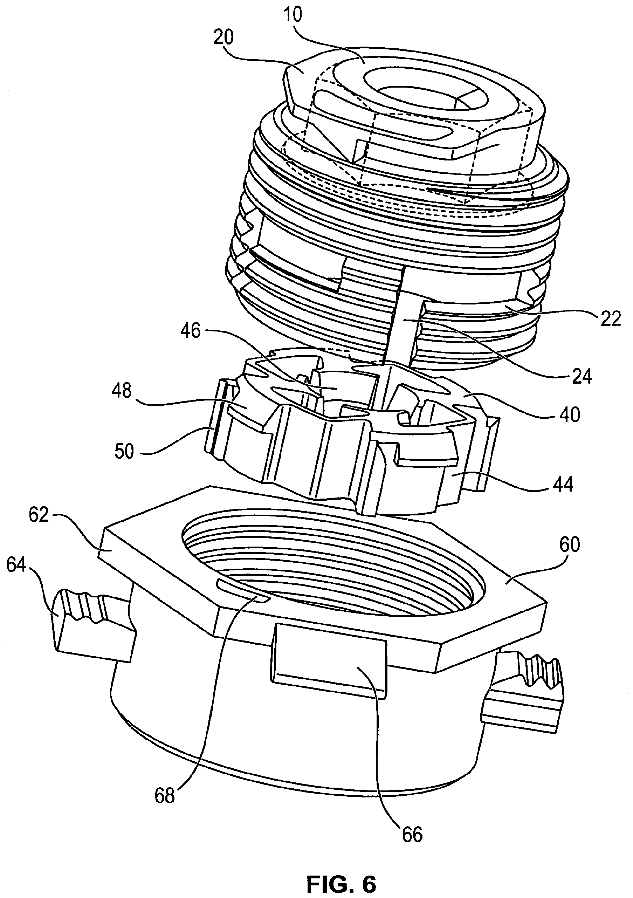

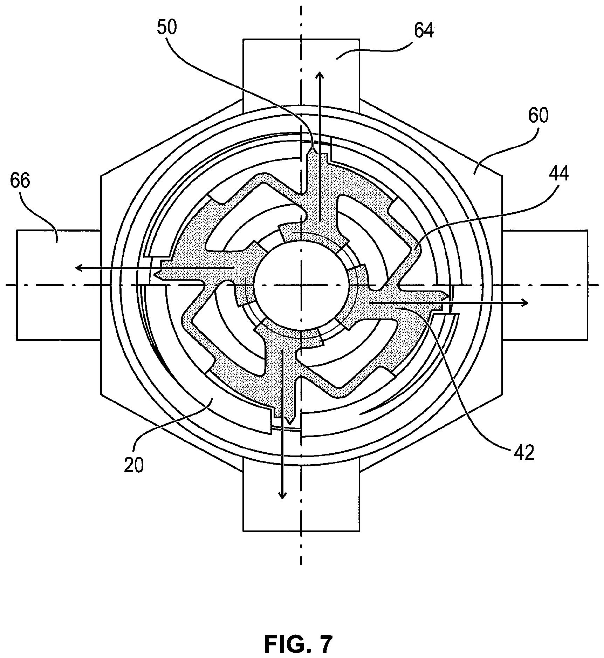

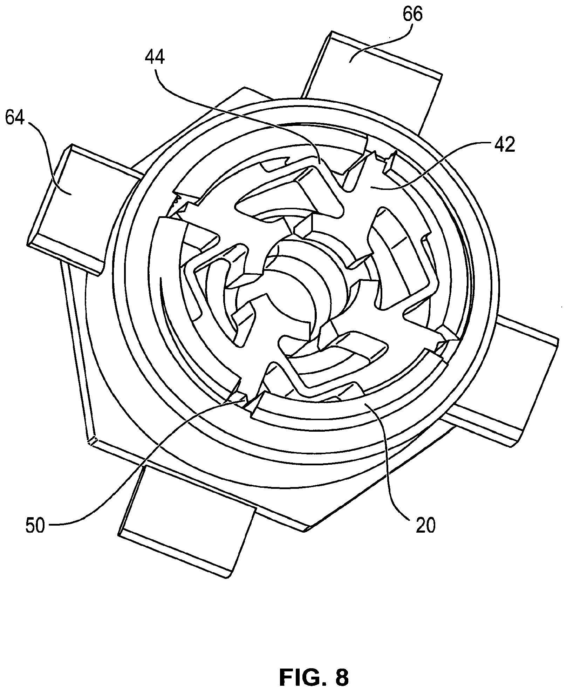

Nachfolgend und unter zusätzlicher Bezugnahme auf die Figuren 2 bis 8 wird der Aufbau der Toleranzausgleichsanordnung 1 näher erläutert. Figur 2 zeigt hierzu zunächst eine Befestigungshülse 10 in Form einer Mutter aus Metall mit einem zweiten Innengewinde und einem Flansch 12. Die Befestigungshülse 10 wird vom Material der Verstelleinheit 20 umspritzt, so dass das erste axiale Ende der Befestigungshülse 10, also das Ende ohne Flansch 12, bündig mit dem ersten axialen Ende der Verstelleinheit 20 abschließt. Bei der späteren Verwendung wird die zweite Gewindepaarung vom Innengewinde der Befestigungshülse und dem Außengewinde einer Befestigungsschraube gebildet.

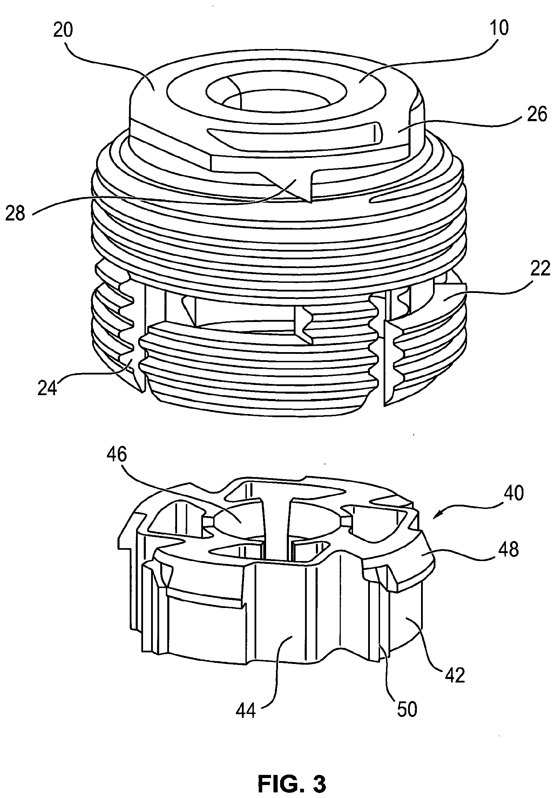

Figur 3 zeigt die Verstelleinheit 20 mit eingeformter Befestigungshülse 10 sowie eine separate Mitschleppereinheit 40. Die Verstelleinheit 20 weist, wie auch das Basiselement 60, einen zylindrischen Grundkörper auf. Allerdings umfasst die Verstelleinheit 20 ein erstes Außengewinde, das mit dem ersten Innengewinde des Basiselements 60 eine erste Gewindepaarung einer ersten Gangrichtung bildet. Vorzugsweise handelt es sich um eine Gewindepaarung aus Kunststoff. Am axial ersten Ende weist die Verstelleinheit 20 zudem einen radialen Vorsprung 26 als radial vorstehende Struktur auf, an dem ein in Richtung des zweiten axialen Endes der Verstelleinheit 20 vorstehender axialer Vorsprung 28 vorhanden ist. Dieser axiale Vorsprung 28 ist so geformt, dass er mit einer Aussparung 68 im Basiselement 60 im eingeschraubten Zustand der Verstelleinheit 20 derart zusammenwirkt, dass ein weiteres Einschrauben verhindert ist. Zudem wird auf diese Weise eine Transportsicherung für die Toleranzausgleichsanordnung gebildet. Insbesondere gestattet der radiale Vorsprung 26 zur Sicherstellung dieser Funktion, dass der axiale Vorsprung 28 in die Aussparung 68 einrasten kann. Daher ist der radiale Vorsprung 26 derart ausgestaltet, dass er ein Federn des axialen Vorsprungs 28 in axialer Richtung gestattet.

Die Verstelleinheit 20 weist im zylindrischen Grundkörper benachbart dem zweiten axialen Ende eine erste Freimachung 22 auf, die in umfänglicher Richtung verläuft. Es handelt sich also um eine radiale Freimachung. Weiterhin weist die Verstelleinheit 20 eine zweite Freimachung 24 auf, die in axialer Richtung verläuft. Dementsprechend handelt es sich hierbei um eine axiale Freimachung.

Die Mitschleppereinheit 40 ist ebenfalls aus Kunststoff gefertigt. Sie umfasst im dargestellten Ausfiihrungsbeispiel vier umfänglich gleichmäßig beabstandete Mitschleppsegmente 42, die über Verbindungsstege 44 miteinander verbunden sind. Die Verbindungsstege 44 weisen eine geringere Dicke als die Befestigungssegmente 42 auf.

Jedes Befestigungssegment 42 weist an der radial inneren Seite eine Fase 46 an einem der Befestigungshülse 10 zugewandten Ende auf. Der Winkel α der Fase 46 kann in Abhängigkeit von dem gewünschten Drehmoment zum Einschrauben der Befestigungsschraube gewählt werden. Dabei beeinflusst neben dem Winkel α der Fase ebenso die Dicke der Verbindungsstege 44 das erforderliche Drehmoment zum Einschrauben der Befestigungsschraube in bzw. durch die Mitschleppereinheit 40, was später erläutert wird. In einer bevorzugten Ausführungsform ist der Winkel α der Fase bezogen auf eine Längsachse der Toleranzausgleichsanordnung 1 ein spitzer Winkel a, der insbesondere ausgewählt ist aus einem Winkelbereich von 10° bis 30°.

Weiterhin weist jedes Befestigungssegment 42 an der radial äußeren Seite eine Rastnase 48 auf. Die Rastnase 48 verläuft umfänglich quer zur Längsachse der Mitschleppereinheit 40 im Bereich des jeweiligen Befestigungssegments 42. Zudem weist jedes Befestigungssegment 42 benachbart zur jeweiligen Rastnase 48 einen Führungssteg 50 auf. Der Führungssteg 50 verläuft parallel zur Längsachse der Mitschleppereinheit 40 und ist vorzugsweise scharfkantig ausgebildet.

Zur Montage wird die Mitschleppereinheit 40 vom zweiten axialen Ende her in die Verstelleinheit 20 eingesetzt, bis die Rastnasen 48 in die erste Freimachung 22 einrasten. Die Führungsstege 50 laufen dabei in den zweiten Freimachungen 24 und verhindern ein Drehen der Mitschleppereinheit 40 während des Einsetzens. Auf diese Weise wird die Mitschleppereinheit 40 vom zweiten axialen Ende der Verstelleinheit 20 her in die Verstelleinheit 20 eingeclipst. Vorzugsweise sind die Mitschleppereinheit 40 und die Befestigungshülse 10 beabstandet zueinander in der Verstelleinheit 20 angeordnet.

Die Verstelleinheit 20 mit darin eingeclipster Mitschleppereinheit 40 wird dann in das Basiselement 60 geschraubt, bis der axiale Vorsprung 28 in die Aussparung 68 des Basiselements 60 eingreift.

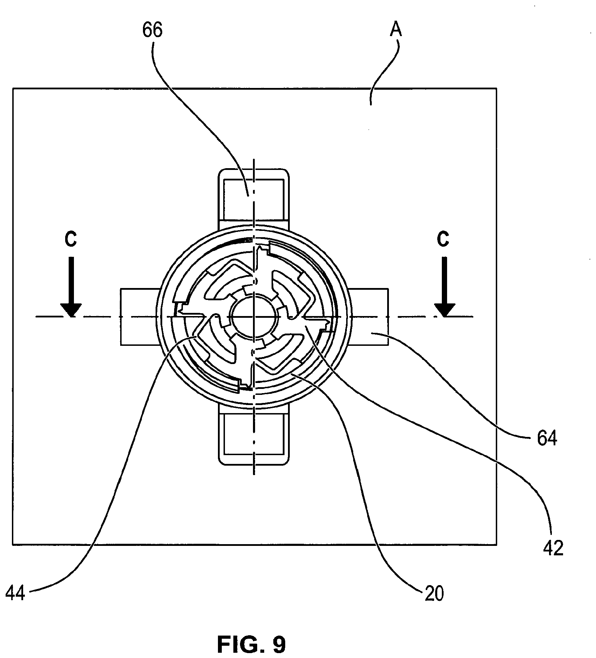

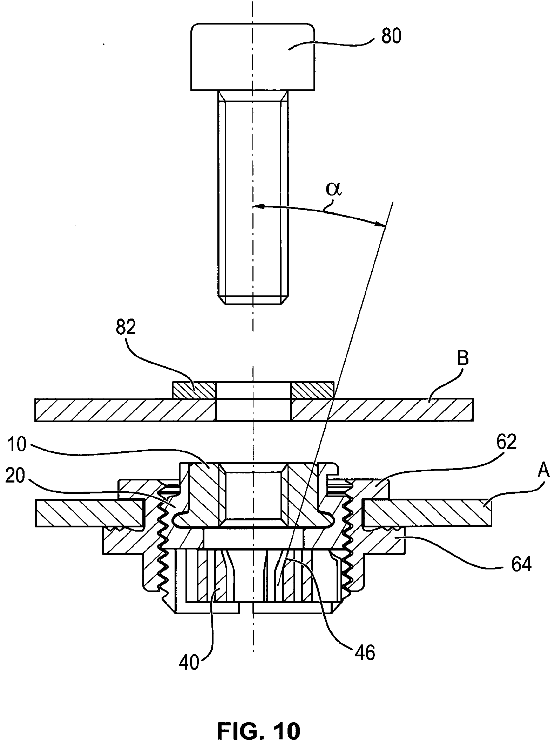

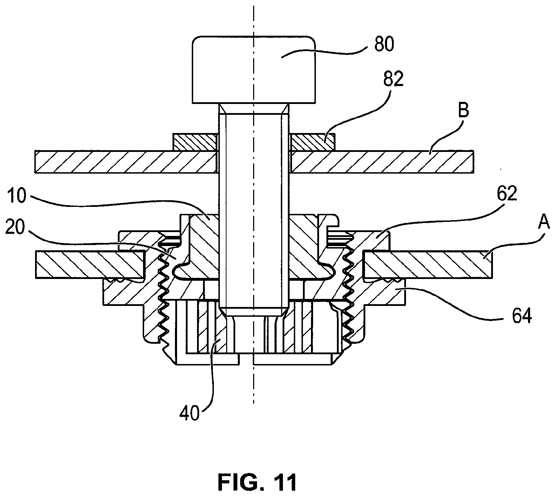

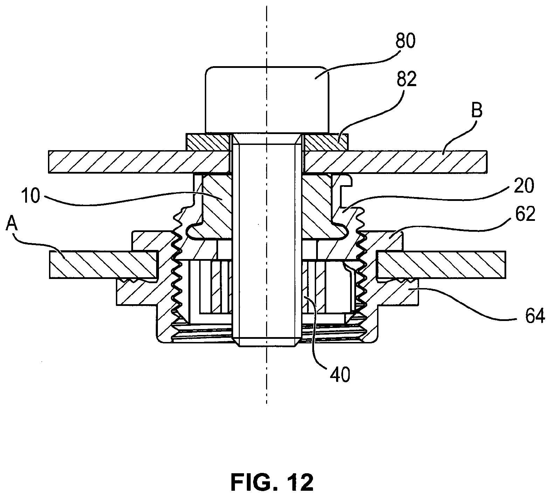

Nun Bezug nehmend auf die Figuren 9 bis 12 wird die Verwendung der Toleranzausgleichsanordnung 1 erläutert. Zunächst wird das Basiselement 60 mit darin eingeschraubter Verstelleinheit 20 in einer Öffnung eines ersten Bauteils A befestigt. Hierzu weist das erste Bauteil A beispielsweise ein Schlüsselloch auf, so dass das Basiselement 60 durch Einsetzen und Drehen in der Öffnung befestigt werden kann. Alternativ ist es bevorzugt, wenn das Basiselement 60 ein Außengewinde, Rastnasen o.ä. aufweist, mit dem es in einer Öffnung des ersten Bauteils A befestigbar oder einclipsbar ist.

Nun wird das zweite Bauteil B in einem Abstand zum ersten Bauteil A so angeordnet, dass eine Öffnung des zweiten Bauteils B mit der Toleranzausgleichsanordnung 1 im ersten Bauteil A ausgerichtet ist. Dann wird die Befestigungsschraube 80 durch die Öffnung im zweiten Bauteil B gesteckt, wobei hier eine Unterlegscheibe 82 vorgesehen sein kann. Nun wird die Befestigungsschraube 80 in die Befestigungshülse 10 geschraubt, bis die Befestigungsschraube 80 auf die Fase 46 der Mitschleppereinheit 40 trifft.

Um die Befestigungsschraube 80 weiterdrehen zu können, müssten die Befestigungssegmente 42 der Mitschleppereinheit 40 nach außen gedrückt werden, bis der Durchgang in der Mitschleppereinheit 40 annähernd so groß ist, wie der Außendurchmesser der Befestigungsschraube 80. Dazu müssten sich die Verbindungsstege 44 entsprechend verbiegen, wofür eine entsprechende Kraft erforderlich ist. Zum jetzigen Zeitpunkt ist das Einleiten dieser Kraft aber nicht möglich, da es sich bei der Gewindepaarung zwischen Verstelleinheit 20 und Basiselement 60 um ein leichtgängiges Gewinde handelt. Daher wird zunächst die Verstelleinheit 20 aus dem Basiselement 60 geschraubt bzw. mitgeschleppt, bis die Verstelleinheit 20 mit dem zweiten Bauteil B in Anlage kommt.

Danach wird die Befestigungsschraube 80 weiter eingedreht und drückt nun über den Winkel der Fase 46 die Befestigungssegmente 42 nach außen. Die dazu benötigte Kraft, und somit auch das Drehmoment, lässt sich über den Winkel der Fase 46 sowie die Dicke der Verbindungsstege 44 einstellen. Die Bewegung der Befestigungssegmente 42 der Mitschleppereinheit 40 wird auf das geschlitzte bzw. mit der ersten und zweiten Freimachung versehene Gewinde der Verstelleinheit 20 übertragen. Dabei ist die Toleranzausgleichsanordnung 1 vorzugsweise so ausgelegt, dass, wenn sich die Befestigungsschraube 80 im zylindrischen Teil des Durchgangs in der Mitschleppereinheit 40 befindet bzw. sich ihr Gewinde zumindest teilweise in die Mitschleppereinheit 40 einschneidet oder einfurcht, nicht nur das Spiel in der Gewindepaarung zwischen Verstelleinheit 20 und Basiselement 60 eliminiert ist, sondern auch durch Übermaß eine zusätzliche Verpressung entsteht. Die Verbindung ist jetzt spielfrei und gegen Lösen geklemmt.

Um eine zusätzliche Sicherung gegen ein Losdrehen zu erreichen, sind vorzugsweise die Führungsstege 50 scharfkantig ausgeführt. Diese beißen sich dann in das erste Innengewinde des Basiselements 60. Zusätzlich oder alternativ können im eingeschraubten Zustand der Befestigungsschraube 80 auch die Rastnasen 48 mit dem Innengewinde des Basiselements 60 in Eingriff stehen und so die Verklemmung weiter unterstützen.

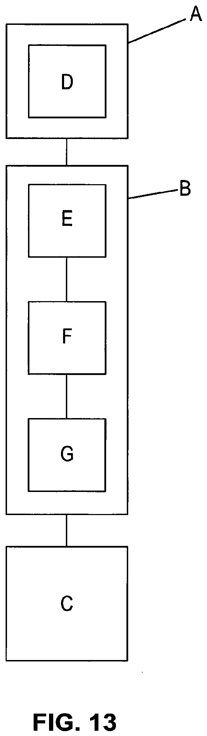

Nun Bezug nehmend auf Figur 13 wird ein schematischer Verfahrensablauf einer Ausführungsform eines Herstellungsverfahrens für eine erfindungsgemäße Toleranzausgleichsanordnung erläutert. In Schritt A erfolgt das Bereitstellen eines Basiselements mit einem ersten Innengewinde sowie einer Befestigungsstruktur an einer Außenseite. Dieser Schritt umfasst dabei das Spritzgießen des Basiselements aus Kunststoff (Schritt D).

Weiterhin wird in Schritt B eine Verstelleinheit bereitgestellt. Die Verstelleinheit weist ein erstes Außengewinde und eine Befestigungshülse mit einem zweiten Innengewinde auf, die benachbart zu einem ersten axialen Ende der Verstelleinheit angeordnet ist. Weiterhin ist eine Mitschleppereinheit zumindest teilweise in der Verstelleinheit benachbart zu einem zweiten axialen Ende der Verstelleinheit angeordnet. Bei der Verstelleinheit und der Mitschleppereinheit handelt es sich daher um getrennte Bauteile. Schritt B kann daher in mehrere Schritte unterteilt werden. In einem Schritt E wird daher die Befestigungshülse aus Metall bereitgestellt und mit einem Kunststoff zur Herstellung der Verstelleinheit umspritzt. Alternativ zum Umspritzen ist auch ein Einkleben der Befestigungshülse in die Verstelleinheit, ein Einschrumpfen oder ein Einklemmen in die Verstelleinheit bevorzugt. Gleichzeitig oder zu einem anderen Zeitpunkt wird in Schritt F eine Mitschleppereinheit bereitgestellt, insbesondere durch Spritzgießen einer Mitschleppereinheit. Schließlich erfolgt in Schritt G ein Einclipsen der Mitschleppereinheit in die Verstelleinheit.

Als letzter Schritt umfasst das Montageverfahren in Schritt C das Einschrauben der Verstelleinheit in das Basiselement, wobei das erste Außengewinde mit dem ersten Innengewinde eine erste Gewindepaarung einer ersten Gangrichtung bildet.

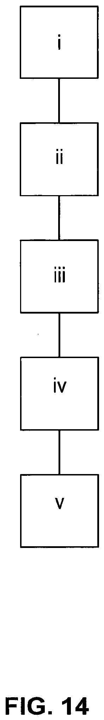

Ein schematischer Verfahrensablauf einer Ausfiihrungsfonn eines Montageverfahrens für zwei Bauteile aneinander mit einer Toleranzausgleichsanordnung wird nachfolgend unter Bezugnahme auf Figur 14 erläutert. Zunächst erfolgt in Schritt i ein Einsetzen der Toleranzausgleichsanordnung in eine erste Öffnung eines ersten Bauteils. Die Toleranzausgleichsanordnung umfasst ein Basiselement, das ein erstes Innengewinde sowie eine Befestigungsstruktur an einer Außenseite zur Befestigung des Basiselements in einer Öffnung des ersten Bauteils aufweist, eine in das Basiselement eingeschraubte Verstelleinheit mit einem ersten Außengewinde, wobei das erste Außengewinde mit dem ersten Innengewinde des Basiselements eine erste Gewindepaarung einer ersten Gangrichtung bildet und die Verstelleinheit benachbart zu einem ersten axialen Ende eine Befestigungshülse mit einem zweiten Innengewinde aufweist, sowie eine Mitschleppereinheit, die zumindest teilweise in der Verstelleinheit benachbart zu einem zweiten axialen Ende angeordnet ist. Dann wird in Schritt ii ein zweites Bauteil im Abstand zum ersten Bauteil mit darin eingesetzter Toleranzausgleichsanordnung angeordnet. Das Einsetzen einer Befestigungsschraube durch eine Öffnung im zweiten Bauteil und Einschrauben der Befestigungsschraube in die Befestigungshülse erfolgt in Schritt iii. Die Befestigungsschraube weist hierzu ein zweites Außengewinde auf, das mit dem zweiten Innengewinde der Befestigungshülse eine zweite Gewindepaarung einer der ersten entgegengesetzten zweiten Gangrichtung bildet. Das Einschrauben erfolgt durch ein Drehen der Befestigungsschraube in die zweite Gangrichtung. Daraufhin findet in Schritt iv das Weiterdrehen der Befestigungsschraube statt, bis die Befestigungsschraube mit der Mitschleppereinheit reibschlüssig in Eingriff steht, wodurch die Verstelleinheit aus dem Basiselement in Richtung des zweiten Bauteils bewegt wird, bis die Verstelleinheit, insbesondere die Befestigungshülse, in Anlage mit dem zweiten Bauteil kommt.

Schließlich erfolgt in Schritt v das Weiterdrehen der Befestigungsschraube in die Mitschleppereinheit, insbesondere unter Überwindung eines Drehmoments, wodurch die Mitschleppereinheit die Verstelleinheit im Basiselement verklemmt.

### 6. Bezugszeichenliste

- 1: Toleranzausgleichsanordnung

- 10: Befestigungshülse
- 12: Flansch

- 20: Verstelleinheit
- 22: erste Freimachung
- 24: zweite Freimachung
- 26: radialer Vorsprung
- 28: axialer Vorsprung

- 40: Mitschleppereinheit
- 42: Mitschleppsegment
- 44: Verbindungssteg
- 46: Fase
- 48: Rastnase
- 50: Führungssteg

- 60: Basiselement
- 62: Flansch
- 64: Haltevorsprung
- 66: Rastvorsprung
- 68: Aussparung

- 80: Befestigungsschraube
- 82: Unterlegscheibe

- A: erstes Bauteil
- B: zweites Bauteil

## Patentansprüche

1. Toleranzausgleichsanordnung (1) zum Befestigen eines ersten Bauteils (A) an einem zweiten Bauteil (B) mit selbsttätigem Ausgleich von Toleranzen im Abstand zwischen dem ersten Bauteil (A) und dem zweiten Bauteil (B), die die folgenden Merkmale aufweist:
a. ein Basiselement (60) mit einem ersten Innengewinde sowie einer Befestigungsstruktur an einer Außenseite zur Befestigung des Basiselements (60) in einer Öffnung des ersten Bauteils (A),
b. eine Verstelleinheit (20) mit einem ersten Außengewinde, wobei das erste Außengewinde mit dem ersten Innengewinde des Basiselements (60) eine erste Gewindepaarung einer ersten Gangrichtung bildet und die Verstelleinheit (20) benachbart zu einem ersten axialen Ende eine Befestigungshülse (10) mit einem zweiten Innengewinde aufweist, und
c. eine Mitschleppereinheit (40), die zumindest teilweise in der Verstelleinheit (20) benachbart zu einem zweiten axialen Ende angeordnet ist, **dadurch gekennzeichnet, dass**
d. eine Befestigungsschraube (80) über eine zweite Gewindepaarung einer der ersten entgegengesetzten zweiten Gangrichtung zunächst in das zweite Innengewinde der Befestigungshülse (10) durch ein Drehen in die zweite Gangrichtung einschraubbar ist und nachfolgend mit der Mitschleppereinheit (40) durch eine lösbare Mitschleppverbindung verbindbar ist, so dass beim Drehen der Befestigungsschraube (80) die Verstelleinheit (20) mitdrehbar sowie in Anlage mit dem zweiten Bauteil (B) bewegbar ist und danach ein radialer Presssitz zwischen Verstelleinheit (20) und Basiselement (60) herstellbar ist.

2. Toleranzausgleichsanordnung (1) gemäß Patentanspruch 1, in der das erste axiale Ende mit der Befestigungshülse (10) abgewandt ist vom Basiselement (60) und das zweite axiale Ende der Verstelleinheit (20) mit der Mitschleppereinheit (40) ist dem Basiselement (60) zugewandt.

3. Toleranzausgleichsanordnung (1) gemäß einem der vorhergehenden Patentansprüche, in der die Mitschleppereinheit (40) eine Mehrzahl an Mitschleppsegmenten (42) aufweist, die umfänglich gleichmäßig beabstandet und mittels Verbindungsstegen (44) verbunden sind.

4. Toleranzausgleichsanordnung (1) gemäß Patentanspruch 3, in der jedes der Mitschleppsegmente (42) an der radial inneren Seite eine Fase (46) an einem der Befestigungshülse (10) zugewandten Ende aufweist.

5. Toleranzausgleichsanordnung (1) gemäß Patentanspruch 3 oder 4, in der jedes der Mitschleppsegmente (42) an der radial äußeren Seite eine Rastnase (48) oder einen Klemmsteg aufweist, die mit einer ersten Freimachung (22) der Verstelleinheit (20) zusammenwirkt.

6. Toleranzausgleichsanordnung (1) gemäß Patentanspruch 5, in der die Rastnase (48) oder der Klemmsteg nach dem Einschrauben einer Befestigungsschraube (80) direkt mit dem Basiselement (60) in Kontakt stehen.

7. Toleranzausgleichsanordnung (1) gemäß einem der Patentansprüche 3 bis 6, in der jedes der Mitschleppsegmente (42) an der radial äußeren Seite einen Führungssteg (50) benachbart der Rastnasen (48) aufweist, der mit einer zweiten Freimachung (24) der Verstelleinheit (20) zusammenwirkt.

8. Toleranzausgleichsanordnung (1) gemäß Patentanspruch 7, in der der Führungssteg (50) scharfkantig ausgebildet ist und nach Einschrauben einer Befestigungsschraube (80) direkt mit dem Basiselement (60) in Kontakt steht.

9. Toleranzausgleichsanordnung (1) gemäß einem der Patentansprüche 2 bis 8, in der die Verbindungsstege (44) eine geringere Dicke als die Mitschleppsegmente (42) aufweisen.

10. Toleranzausgleichsanordnung (1) gemäß einem der vorhergehenden Patentansprüche, in der die Verstelleinheit (20) aus Kunststoff und die Befestigungshülse (10) aus Metall bestehen, wobei die Befestigungshülse (10) vom Material der Verstelleinheit (20) umspritzt und ein erstes axiales Ende der Befestigungshülse (10) bündig mit dem ersten axialen Ende der Verstelleinheit (20) angeordnet ist und/oder in der die Mitschleppereinheit (40) und das Basiselement (60) aus Kunststoff bestehen und/oder in der die Mitschleppereinheit (40) vier Befestigungssegmente aufweist.

11. Toleranzausgleichsanordnung (1) gemäß einem der vorhergehenden Patentansprüche, in der die Verstelleinheit (20) benachbart dem ersten axialen Ende eine Struktur aufweist, insbesondere eine radial vorstehende Struktur an der ein Vorsprung (26) angeordnet ist, der in axialer Richtung in Richtung des zweiten axialen Endes der Verstelleinheit (20) vorsteht, die mit einer Aussparung (68) im Basiselement (60) zusammenwirkt, so dass eine Konter- und/oder Verdrehsicherung gebildet ist.

12. Ein erstes Bauteil (A) in Kombination mit einer Toleranzausgleichsanordnung (1) gemäß einem der vorhergehenden Patentansprüche, wobei die Toleranzausgleichsanordnung (1) in das erste Bauteil (A) eingesetzt ist.

13. Ein erstes (A) und ein zweites Bauteil (B), die über die Toleranzausgleichsanordnung (1) gemäß einem der Patentansprüche 1 bis 11 und mittels einer Befestigungsschraube (80) aneinander befestigt sind.

14. Herstellungsverfahren einer Toleranzausgleichsanordnung (1) gemäß einem der Patentansprüche 1 bis 11, **gekennzeichnet durch** die folgenden Schritte:
a. Bereitstellen eines Basiselements (60) mit einem ersten Innengewinde sowie einer Befestigungsstruktur an einer Außenseite,
b. Bereitstellen einer Verstelleinheit (20) mit einem ersten Außengewinde, einer Befestigungshülse (10) mit einem zweiten Innengewinde, die benachbart zu einem ersten axialen Ende der Verstelleinheit (20) angeordnet ist sowie einer zumindest teilweise in der Verstelleinheit (20) benachbart zu einem zweiten axialen Ende der Verstelleinheit (20) angeordneten Mitschleppereinheit (40), danach
c. Einschrauben der Verstelleinheit (20) in das Basiselement (60), wobei das erste Außengewinde mit dem ersten Innengewinde eine erste Gewindepaarung einer ersten Gangrichtung bildet.

15. Herstellungsverfahren gemäß Patentanspruch 14, wobei der Schritt des Bereitstellens des Basiselements (60) umfasst:
d. Spritzgießen des Basiselements (60) aus Kunststoff.

16. Herstellungsverfahren gemäß einem der Patentansprüche 14 oder 15, wobei der Schritt des Bereitstellens der Verstelleinheit (20) umfasst:
e. Bereitstellen der Befestigungshülse (10) aus Metall und Umspritzen der Befestigungshülse (10) mit einem Kunststoff zur Herstellung der Verstelleinheit (20) und/oder
f. Bereitstellen einer Mitschleppereinheit (40), insbesondere Spritzgießen einer Mitschleppereinheit (40), sowie Einclipsen der Mitschleppereinheit (40) in die Verstelleinheit (20).

17. Montageverfahren einer Toleranzausgleichsanordnung (1), insbesondere einer Toleranzausgleichsanordnung (1) gemäß einem der Patentansprüche 1 bis 11, das die Schritte aufweist:
a. Einsetzen der Toleranzausgleichsanordnung (1) in eine erste Öffnung eines ersten Bauteils (A), wobei die Toleranzausgleichsanordnung (1) aufweist ein Basiselement (60), das ein erstes Innengewinde sowie eine Befestigungsstruktur an einer Außenseite zur Befestigung des Basiselements (60) in einer Öffnung des ersten Bauteils (A) umfasst,
eine in das Basiselement (60) eingeschraubte Verstelleinheit (20) mit einem ersten Außengewinde, wobei das erste Außengewinde mit dem ersten Innengewinde des Basiselements (60) eine erste Gewindepaarung einer ersten Gangrichtung bildet und die Verstelleinheit (20) benachbart zu einem ersten axialen Ende eine Befestigungshülse (10) mit einem zweiten Innengewinde aufweist, sowie
eine Mitschleppereinheit (40), die zumindest teilweise in der Verstelleinheit (20) benachbart zu einem zweiten axialen Ende angeordnet ist, sowie
b. Anordnen eines zweiten Bauteils (B) in einem Abstand zum ersten Bauteil (A) mit darin eingesetzter Toleranzausgleichsanordnung (1), und das Verfahren ist **gekennzeichnet durch** die weiteren Schritte:
c. Einsetzen einer Befestigungsschraube (80) durch eine Öffnung im zweiten Bauteil (B), wobei die Befestigungsschraube (80) ein zweites Außengewinde aufweist, das mit dem zweiten Innengewinde der Befestigungshülse (10) eine zweite Gewindepaarung einer der ersten entgegengesetzten zweiten Gangrichtung bildet, und Einschrauben der Befestigungsschraube (80) in die Befestigungshülse (10) durch ein Drehen der Befestigungsschraube (80) in die zweite Gangrichtung, danach
d. Weiterdrehen der Befestigungsschraube (80) bis die Befestigungsschraube (80) mit der Mitschleppereinheit (40) reibschlüssig in Eingriff steht, wodurch die Verstelleinheit (20) aus dem Basiselement (60) in Richtung des zweiten Bauteils (B) bewegt wird, bis die Verstelleinheit (20), insbesondere die Befestigungshülse (10), in Anlage mit dem zweiten Bauteil (B) kommt, und
e. Weiterdrehen der Befestigungsschraube (80) in die Mitschleppereinheit (40), wodurch die Mitschleppereinheit (40) die Verstelleinheit (20) im Basiselement (60) verklemmt.

## Claims

1. Tolerance compensation arrangement (1) for fastening a first component (A) to a second component (B) with an automatic compensation of tolerances in the spacing between the first component (A) and the second component (B), comprising the following features:
a. a base element (60) with a first inner thread as well as a fastening structure at an outside for fastening the base element (60) in an opening of the first component (A),
b. an adjusting unit (20) with a first outer thread, with the first outer thread together with the first inner thread of the base element (60) forming a first thread pairing of a first thread direction and the adjusting unit (20) comprising a fastening sleeve (10) with a second inner thread adjacent to a first axial end, and
c. a dragging unit (40) being arranged at least partly in the adjusting unit (20) adjacent to a second axial end, **characterized in that**
d. a fastening screw (80) can be screwed into the second inner thread of the fastening sleeve (10) first by rotating in the second thread direction via a second thread pairing of a second thread direction contrary to the first thread direction, and can subsequently be connected with the dragging unit (40) by means of a releaseable dragging connection, so that when rotating the fastening screw (80), the adjusting unit (20) can be co-rotated and is movable in abutment with the second component (B) and after that, a radial press fit between adjusting unit (20) and base element (60) can be established.

2. Tolerance compensation arrangement (1) according to claim 1, in which the first axial end with the fastening sleeve (10) faces away from the base element (60) and the second axial end of the adjusting unit (20) with the dragging unit (40) faces towards the base element (60).

3. Tolerance compensation arrangement (1) according to one of the preceding claims, in which the dragging unit (40) comprises a plurality of dragging segments (42), which are circumferentially evenly spaced and connected by means of connecting webs (44).

4. Tolerance compensation arrangement (1) according to claim 3, in which each of the dragging segments (42) comprises a chamfer (46) at the radially inner side at an end which faces towards the fastening sleeve (10).

5. Tolerance compensation arrangement (1) according to claim 3 or 4, in which each of the dragging segments (42) includes a locking notch (48) or a clamping web at the radially outer side, which interacts with a first cut-out (22) of the adjusting unit (20).

6. Tolerance compensation arrangement (1) according to claim 5, in which the locking notch (48) or the clamping web is in direct contact with the base element (60) after a fastening screw (80) has been screwed in.

7. Tolerance compensation arrangement (1) according to one of the claims 3 to 6, in which each of the dragging segments (42) includes a guiding web (50) adjacent to the locking notches (48) at the radial outer side, the web interacting with a second cut-out (24) of the adjusting unit (20).

8. Tolerance compensation arrangement (1) according to claim 7, in which the guiding web (50) is configured with sharp edges and is in direct contact with the base element (60) after a fastening screw (80) has been screwed in.

9. Tolerance compensation arrangement (1) according to one of the claims 2 to 8, in which the connecting webs (44) have a lower thickness than the dragging segments (42).

10. Tolerance compensation arrangement (1) according to one of the preceding claims, in which the adjusting unit (20) consists of plastic material and the fastening sleeve (10) consists of metal, with the fastening sleeve (10) being overmolded by the material of the adjusting unit (20) and a first axial end of the fastening sleeve (10) being arranged flush with the first axial end of the adjusting unit (20) and/or in which the dragging unit (40) and the base element (60) consist of plastic material and/or in which the dragging unit (40) includes four fastening segments.

11. Tolerance compensation arrangement (1) according to one of the preceding claims, in which the adjusting unit (20) has a structure adjacent to the first axial end, in particular a radially projecting structure to which a projection (26) is arranged projecting in axial direction in the direction of the second axial end of the adjusting unit (20), which interacts with a recess (68) in the base element (60), so that a counter lock and/or rotation lock is formed.

12. A first component (A) in combination with a tolerance compensation arrangement (1) according to one of the preceding claims, with the tolerance compensation arrangement (1) being inserted into the first component (A).

13. A first (A) and a second component (B) which are fastened to each other via the tolerance compensation arrangement (1) according to one of the claims 1 to 11 and by means of a fastening screw (80).

14. Production method of a tolerance compensation arrangement (1) according to one of the claims 1 to 11, **characterized by** the following steps:
a. providing a base element (60) with a first inner thread as well as a fastening structure at an outside,
b. providing an adjusting unit (20) with a first outer thread, a fastening sleeve (10) with a second inner thread that is arranged adjacent to a first axial end of the adjusting unit (20) as well as with a dragging unit (40) that is arranged at least partly in the adjusting unit (20) adjacent to a second axial end of the adjusting unit (20), after that
c. screwing the adjusting unit (20) into the base element (60), with the first outer thread together with the first inner thread forming a first thread pairing of a first thread direction.

15. Production method according to claim 14, with the step of providing the base element (60) comprising:
d. injection molding the base element (60) out of plastic material.

16. The production method according to one of the claims 14 or 15, wherein the step of providing the adjusting unit (20) comprises:
e. providing the fastening sleeve (10) out of metal and overmolding the fastening sleeve (10) with a plastic material for producing the adjusting unit (20) and/or
f. providing a dragging unit (40), in particular injection-molding a dragging unit (40), as well as clipping the dragging unit (40) into the adjusting unit (20).

17. Assembly method of a tolerance compensation arrangement (1), in particular of a tolerance compensation arrangement (1) according to one of the claims 1 to 11, comprising the steps:
a. inserting the tolerance compensation arrangement (1) into a first opening of a first component (A), with the tolerance compensation arrangement (1) comprising
a base element (60) comprising a first inner thread as well as a fastening structure at an outer side for fastening the base element (60) in an opening of the first component (A), an adjusting unit (20) being screwed into the base element (60) with a first outer thread, the first outer thread together with the first inner thread of the base element (60) forming a first thread pairing of a first thread direction and the adjusting unit (20) having a fastening sleeve (10) with a second inner thread adjacent to a first axial end, as well as a dragging unit (40) which is arranged at least partly in the adjusting unit (20) adjacent to a second axial end, as well as
b. arranging a second component (B) in a spacing to the first component (A) with a tolerance compensation arrangement (1) inserted in there, and the method is **characterized by** the further steps:
c. inserting a fastening screw (80) through an opening in the second component (B), with the fastening screw (80) having a second outer thread which, together with the second inner thread of the fastening sleeve (10), forms a second thread pairing of a second thread direction that is opposite to the first thread direction, and screwing the fastening screw (80) into the fastening sleeve (10) by means of a rotation of the fastening screw (80) in the second thread direction, subsequently
d. further rotating the fastening screw (80) until there is a frictional engagement of the fastening screw (80) with the dragging unit (40), causing the adjusting unit (20) to be move out of the base element (60) in the direction of the second component (B) until the adjusting unit (20), in particular the fastening sleeve (10), abuts the second component (B), and
e. further rotating the fastening screw (80) into the dragging unit (40), which causes the dragging unit (40) to clamp the adjusting unit (20) in the base element (60).

## Revendications

1. Dispositif de compensation de tolérance (1) destiné à fixer un premier composant (A) à un deuxième composant (B) avec compensation automatique de tolérances dans l'espace entre le premier composant (A) et le deuxième composant (B), présentant les caractéristiques suivantes :
a. un élément de base (60) avec un premier filetage intérieur ainsi qu'une structure de fixation sur un côté extérieur, pour la fixation de l'élément de base (60) dans une ouverture du premier composant (A),
b. une unité de réglage (20) avec un premier filetage extérieur, dans lequel le premier filetage extérieur forme un premier accouplement fileté d'un premier sens de pas avec le premier filetage intérieur de l'élément de base (60) et l'unité de réglage (20) présente une douille de fixation (10) avec un deuxième filetage intérieur, adjacente à une première extrémité axiale, et
c. une unité d'entraînement (40) disposée au moins partiellement dans l'unité de réglage (20) de façon adjacente à une deuxième extrémité axiale, **caractérisé en ce que**
d. une vis de fixation (80) peut être vissée par le biais d'un deuxième accouplement fileté d'un deuxième sens de pas opposé au premier, tout d'abord dans le deuxième filetage intérieur de la douille de fixation (10) par une rotation dans le deuxième sens de pas, puis reliée à l'unité d'entraînement (40) par une liaison d'entraînement libérable, de telle façon que lors de la rotation de la vis de fixation (80), l'unité de réglage (20) peut être entraînée en rotation et peut être mise en contact avec le deuxième composant (B), et puis un ajustement serré radial peut être réalisé entre l'unité de réglage (20) et l'élément de base (60).

2. Dispositif de compensation de tolérance (1) selon la revendication 1, dans lequel la première extrémité axiale avec la douille de fixation (10) est opposée à l'élément de base (60) et la deuxième extrémité axiale de l'unité de réglage (20) avec l'unité d'entraînement (40) est tournée vers l'élément de base (60).

3. Dispositif de compensation de tolérance (1) selon l'une des revendications précédentes, dans lequel l'unité d'entraînement (40) présente une pluralité de segments d'entraînement (42), lesquels sont espacés de façon régulière sur le pourtour et reliés par des nervures de liaison (44).

4. Dispositif de compensation de tolérance (1) selon la revendication 3, dans lequel chacun des segments d'entraînement (42) présente, sur le côté radialement intérieur, un chanfrein (46) à une extrémité tournée vers la douille de fixation (10).

5. Dispositif de compensation de tolérance (1) selon la revendication 3 ou 4, dans lequel chacun des segments d'entraînement (42) présente, sur le côté radialement extérieur, un nez d'encliquetage (48) ou une nervure de serrage, lequel/laquelle coopère avec un premier évidement (22) de l'unité de réglage (20).

6. Dispositif de compensation de tolérance (1) selon la revendication 5, dans lequel le nez d'encliquetage (48) ou la nervure de serrage est en contact direct avec l'élément de base (60) après vissage d'une vis de fixation (80).

7. Dispositif de compensation de tolérance (1) selon l'une des revendications 3 à 6, dans lequel chacun des segments d'entraînement (42) présente une nervure de guidage (50) adjacente aux nez d'encliquetage (48) sur le côté radialement extérieur, laquelle coopère avec un deuxième évidement (24) de l'unité de réglage (20).

8. Dispositif de compensation de tolérance (1) selon la revendication 7, dans lequel la nervure de guidage (50) est réalisée avec des arêtes vives et se trouve en contact direct avec l'élément de base (60) après vissage d'une vis de fixation (80).

9. Dispositif de compensation de tolérance (1) selon l'une des revendications 2 à 8, dans lequel les nervures de liaison (44) présentent une épaisseur inférieure à celle des segments d'entraînement (42).

10. Dispositif de compensation de tolérance (1) selon l'une des revendications précédentes, dans lequel l'unité de réglage (20) est constituée de matière plastique et la douille de fixation (10) de métal, dans lequel la douille de fixation (10) est surmoulée dans le matériau de l'unité de réglage (20) et une première extrémité axiale de la douille de fixation (10) est disposée en affleurement avec la première extrémité axiale de l'unité de réglage (20) et/ou l'unité d'entraînement (40) et l'élément de base (60) sont constitués de matière plastique et/ou l'unité d'entraînement (40) présente quatre segments de fixation.

11. Dispositif de compensation de tolérance (1) selon l'une des revendications précédentes, dans lequel l'unité de réglage (20) présente une structure adjacente à la première extrémité axiale, en particulier une structure se projetant radialement, sur laquelle est disposée une saillie (26) se projetant dans la direction axiale vers la deuxième extrémité axiale de l'unité de réglage (20), laquelle coopère avec une cavité (68) dans l'élément de base (60), de manière à former un blocage ou une protection anti-rotation.

12. Premier composant (A) en combinaison avec un dispositif de compensation de tolérance (1) selon l'une des revendications précédentes, dans lequel le dispositif de compensation de tolérance (1) est inséré dans le premier composant (A).

13. Premier composant (A) et deuxième composant (B), lesquels sont fixés l'un à l'autre par le biais du dispositif de compensation de tolérance (1) selon l'une des revendications 1 à 11 et au moyen d'une vis de fixation (80).

14. Procédé de fabrication d'un dispositif de compensation de tolérance (1) selon l'une des revendications 1 à 11, **caractérisé par** les étapes suivantes :
a. mise à disposition d'un élément de base (60) avec un premier filetage intérieur ainsi qu'une structure de fixation sur un côté extérieur,
b. mise à disposition d'une unité de réglage (20) avec un premier filetage extérieur, d'une douille de fixation (10) avec un deuxième filetage intérieur, laquelle est disposée de façon adjacente à une première extrémité axiale de l'unité de réglage (20), ainsi que d'une unité d'entraînement (40) disposée au moins partiellement dans l'unité de réglage (20), de façon adjacente à une deuxième extrémité axiale de l'unité de réglage (20), puis
c. vissage de l'unité de réglage (20) dans l'élément de base (60), le premier filetage extérieur formant un premier accouplement fileté d'un premier sens de pas avec le premier filetage intérieur.

15. Procédé de fabrication selon la revendication 14, dans lequel l'étape de mise à disposition de l'élément de base (60) comporte :
d. le moulage par injection de l'élément de base (60) dans une matière plastique.

16. Procédé de fabrication selon l'une des revendications 14 ou 15, dans lequel l'étape de mise à disposition de l'unité de réglage (20) comporte :
e. la mise à disposition de la douille de fixation (10) en métal et le surmoulage de la douille de fixation (10) avec une matière plastique pour la fabrication de l'unité de réglage (20) et/ou
f. la mise à disposition d'une unité d'entraînement (40), en particulier de moulage par injection d'une unité d'entraînement (40), ainsi que le clipsage de l'unité d'entraînement (40) dans l'unité de réglage (20).

17. Procédé de montage d'un dispositif de compensation de tolérance (1), en particulier d'un dispositif de compensation de tolérance (1) selon l'une des revendications 1 à 11, présentant les étapes suivantes :
a. insertion du dispositif de compensation de tolérance (1) dans une première ouverture d'un premier composant (A), le dispositif de compensation de tolérance (1) présentant :
un élément de base (60) comportant un premier filetage intérieur ainsi qu'une structure de fixation sur un côté extérieur, pour la fixation de l'élément de base (60) dans une ouverture du premier composant (A),
une unité de réglage (20) vissée dans l'élément de base (60), avec un premier filetage extérieur, dans lequel le premier filetage extérieur forme un premier accouplement fileté d'un premier sens de pas avec le premier filetage intérieur de l'élément de base (60) et l'unité de réglage (20) présente une douille de fixation (10) avec un deuxième filetage intérieur, adjacente à une première extrémité axiale, et
une unité d'entraînement (40) disposée au moins partiellement dans l'unité de réglage (20), de façon adjacente à une deuxième extrémité axiale, et
b. agencement d'un deuxième composant (B) à une distance du premier composant (A), avec le dispositif de compensation de tolérance (1) inséré dans celui-ci, et le procédé étant **caractérisé par** les étapes supplémentaires suivantes :
c. insertion d'une vis de fixation (80) à travers une ouverture dans le deuxième composant (B), la vis de fixation (80) présentant un deuxième filetage extérieur, lequel forme un deuxième accouplement fileté d'un deuxième sens de pas opposé au premier avec le deuxième filetage intérieur de la douille de fixation (10), et vissage de la vis de fixation (80) dans la douille de fixation (10) par une rotation de la vis de fixation (80) dans le deuxième sens de pas, puis
d. vissage supplémentaire de la vis de fixation (80) jusqu'à ce que la vis de fixation (80) soit en prise par friction avec l'unité d'entraînement (40), moyennant quoi l'unité de réglage (20) est déplacée hors de l'élément de base (60) dans la direction du deuxième composant (B), jusqu'à ce que l'unité de réglage (20), en particulier la douille de fixation (10), entre en contact avec le deuxième composant (B), et
e. vissage supplémentaire de la vis de fixation (80) dans l'unité d'entraînement (40), moyennant quoi l'unité d'entraînement (40) serre l'unité de réglage (20) dans l'élément de base (60).
